# EUROPÄISCHE PATENTSCHRIFT

(11) **EP 1 775 548 B1**
(45) Veröffentlichungstag und Bekanntmachung des Hinweises auf die Patenterteilung: **10.07.2019**
(21) Anmeldenummer: 06021500.1
(22) Anmeldetag: 13.10.2006
(51) Int. Cl.: G01B 11/16, G01B 9/023, G01B 9/02, G01B 11/25

(54) **Verfahren und Vorrichtung zur Erfassung der Verformung von Objekten**
Method and device for the detection of the deformation of objects.
Procédé et dispositif pour la détection de la déformation d'objets.

(30) Priorität: 17.10.2005 DE 102005049607
(43) Veröffentlichungstag der Anmeldung: 18.04.2007
(73) Patentinhaber: Carl Zeiss Optotechnik GmbH, 83115 Neubeuern (DE)
(72) Erfinder: Steinbichler, Marcus, Dr., 83115 Neubeuern (DE); Wilhelm, Robert, 83126 Flintsbach (DE); Sun, Junli, 83064 Raubling (DE); Huber, Rainer, 83451 Piding (DE); Rasenberger, Volker, 83064 Raubling (DE)
(74) Vertreter: Zinnecker, Armin

(56) Entgegenhaltungen:
- EP-A- 1 014 036
- EP-A- 1 030 161
- EP-A- 1 215 465
- US-A- 5 467 184

## Beschreibung

Die Erfindung betrifft ein Verfahren zur Erfassung der Verformung von Objekten, bei dem während der Verformung des Objekts eine Folge von Bildern des Objekts mit einem Meßverfahren aufgenommen wird und aus den Bildern Phasenbilder ermittelt werden. Die Folge von Bildern des Objekts besteht aus mindestens zwei Bildern. Die Erfindung betrifft ferner eine Vorrichtung zur Durchführung eines derartigen Verfahrens.

Verfahren und Vorrichtungen dieser Art, bei denen eine Phasenbildauswertung angewendet wird, werden zu vielfältigen Zwecken verwendet. Sie kommen zur Anwendung bei Verfahren und Vorrichtungen zur Formerfassung von Objekten oder zur Schwingungsanalyse. Die Verfahren und Vorrichtungen können mit einer Projektion von strukturiertem Licht arbeiten, insbesondere mit einer Streifenprojektion, oder mit einer Beleuchtung mit kohärentem Licht, insbesondere Laserlicht. Sie können im Werkzeugmaschinenbau verwendet werden, um beispielsweise die tatsächliche Biegung an einer Biegemaschine zu erfassen oder die Dehnung eines Prüflings an einer Zugbelastungsmaschine. Weitere Anwendungen finden sich bei Maschinen und Geräten zum Erkennen von Oberflächenfehlern oder Oberflächenanomalien wie Beulen, Dellen, Kratzern und Ähnlichem.

Ein Verfahren und eine Vorrichtung der eingangs angegebenen Art werden insbesondere auch vewendet bei der zerstörungsfreien Werkstoffprüfung, insbesondere von Verbundwerkstoffen, und bei der Prüfung von Reifen (Kraftfahrzeugreifen). Dabei wird ein Objekt, also beispielsweise ein Werkstoff, Verbundwerkstoff, Werkstück, Reifen oder dergleichen verformt, was durch Druck, Unterdruck, Wärme oder auf andere Weise geschehen kann. Das Objekt wird in verschiedenen Verformungszuständen gemessen. Anhand der Messungen kann festgestellt werden, ob das Objekt einen Fehler, insbesondere eine Fehlstelle, aufweist.

Bei der Reifenprüfung kann der Reifen in eine Unterdruckkammer eingelegt werden. Der Reifen kann dabei auf einer Felge montiert sein oder ohne Felge in die Unterdruckkammer gelegt werden. Bei einer Absenkung des Drucks führt die in einer Fehlstelle des Reifens eingeschlossene Luft zu einer lokalen Ausdehnung, die durch die Messung erkannt werden kann.

Ein Verfahren zur Messung der Oberfläche eines räumlichen Körpers ist aus der EP 419 936 B1 bekannt. Nach diesem Verfahren kann ein Objekt mit kohärenter Strahlung, insbesondere Laserlicht, bestrahlt werden. Die reflektierte Strahlung wird von einer Abbildungsoptik in eine Bildebene abgebildet, in der sich ein flächenhafter Sensor bzw. ein Bildsensor befindet, vorzugsweise ein CCD-Sensor. Auf den Sensor wird eine Referenzstrahlung mit einer Trägerfrequenz überlagert. Dabei wird die Abbildungsoptik derart ausgebildet bzw. eingestellt, daß das Bild eines durch die kohärente Strahlung auf dem Körper erzeugten Speckles in der Bildebene mindestens drei Sensorelemente (Pixel) überdeckt. Hierdurch ist gewährleistet, daß mit einer einzigen Aufnahme eine vollständige Phasenmessung möglich ist. Aus den Intensitätssignalen der Sensorelemente wird die Phase der Strahlung von dem Objekt bestimmt.

Bei den vorbekannten Verfahren zur Erfassung der Verformung von Objekten können sich Schwierigkeiten ergeben, wenn der fehlertypischen Verformung Störungen überlagert sind. In diesem Fall können die Abstände zwischen verschiedenen Interferenzlinien sehr klein werden, so daß sie nur noch mit Schwierigkeiten oder überhaupt nicht mehr unterschieden werden können, wodurch die Auswertung erschwert oder unmöglich gemacht wird.

Aus der US-A-5 467 184 ist ein Verfahren zur Erfassung der Verformung von Objekten auf der Basis der Speckle-Interferometrie bekannt, bei dem Speckle-Bilder während verschiedener Deformationszustände des Objekts aufgenommen und gespeichert werden. Um auch große Verformungen erfassen zu können, werden Speckle-Bilder in verschiedenen Deformationszuständen in Gruppen zusammengefasst. Die Differenz zwischen dem ersten und letzten Bild jeder Gruppe wird gebildet, und diese Differenzen werden summiert.

Die EP 1 215 465 A1 offenbart ein Verfahren und eine Vorrichtung der eingangs angegebenen Art, die eine zuverlässige Auswertung auch bei größeren Verformungen ermöglichen.

Aus der EP-A-1 030 161 ist ein Verfahren zur Ermittlung von Strukturmerkmalen an Prüfobjekten mit diffus streuender Oberfläche bekannt, bei dem die Objektoberfläche mit kohärentem Licht beleuchtet und mit einer Kamera beobachtet wird. Das Prüfobjekt wird verschiedenen Belastungen ausgesetzt. Die durch die verschiedenen Belastungen hervorgerufenen Verschiebungen oder Dehnungen der Objektoberfläche werden als interferometrisch erzeugte Intesitätsmodulation in den Abbildungen von dem zu vermessenden Objekt auf dem Bildsensor der Kamera erfaßt. Aus diesen Abbildungen wird von einem Bildverarbeitungssystem ein die Verschiebung oder den Spannungszustand/Dehnungszustand des Objekts darstellendes Phasendifferenzbild erzeugt. Um die ursprünglich vorhandenen globalen Verformungen in dem Ergebnisbild zu beseitigen wird von dem Phasendifferenzbild eine Kopie erzeugt, die gegenüber dem ursprünglichen Phasendifferenzbild so manipuliert wird, daß die Strukturmerkmale beseitigt oder zumindest unterdrückt werden. Diese manipulierte Kopie des Phasendifferenzbildes wird mit dem ursprünglichen Phasendifferenzbild verknüpft. Aus dieser Verknüpfung entsteht ein resultierendes Phasendifferenzbild.

Aufgabe der Erfindung ist es, ein verbessertes Verfahren und eine verbesserte Vorrichtung der eingangs angegebenen Art vorzuschlagen.

Erfindungsgemäß wird diese Aufgabe bei einem Verfahren der eingangs angegebenen Art durch die Merkmale des Anspruchs 1 gelöst.

Während der Verformung des Objekts wird eine Folge bzw. Serie von Bildern des Objekts mit einem Messverfahren aufgenommen. Aus den Bildern werden Phasenbilder ermittelt. Es wird die Differenz zwischen dem jeweiligen aktuellen Phasenbild und dem Phasenbild eines Anfangszustandes gebildet. Diese Differenzen werden auf einem Bildschirmanzeigegerät dargestellt, wobei die aus den Phasenbildern gebildeten Phasendifferenzbilder als Film visualisiert werden.

Durch die Erfindung kann die Aussagefähigkeit der Aufnahmen bzw. Bilder bzw. Phasenbilder verbessert werden. Es ist möglich, manuell und/oder selbsttätig nur die relevanten Verformungen aus dem zeitlichen Verlauf der Gesamtverformung zu isolieren. Zusätzlich kann die Bildqualität verbessert und damit die Auswertung erleichtert werden.

Die Differenz oder Differenzen zwischen dem oder dem jeweiligen aktuellen Phasenbild und dem Phasenbild des Anfangszustands kann gegebenenfalls ausgewertet und/oder weiterverarbeitet und/oder an einem Bildanzeigegerät dargestellt werden. Bei der Auswertung bzw. Weiterverarbeitung können räumliche und/oder zeitliche Filteralgorithmen zur Anwendung kommen. Das modulo-2π-Phasenbild kann vor der Bildschirmanzeige demoduliert werden.

Nach dem erfindungsgemäßen Verfahren können verhältnismäßig viele Bilder pro Zeiteinheit aufgenommen werden. In der praktischen Anwendung ist es möglich, die Bilder mit der üblichen Videotaktfrequenz von 25 Vollbildern pro Sekunde aufzunehmen.

Es ist aber auch möglich, andere Bildfrequenzen zu verwenden. Bei langsamen Verformungen können Bildfrequenzen von einem Bild pro Minute oder noch geringere Bildfrequenzen eingesetzt werden. Es ist allerdings auch möglich, die Bilder mit höheren Frequenzen von bis zu einer Million Bildern pro Sekunde aufzunehmen.

Dabei wird ein bestimmtes Phasenbild als Ausgangsbild verwendet. Anschließend werden die Differenzen der aufeinanderfolgenden Phasenbilder zum Ausgangsbild berechnet. Da verhältnismäßig viele Bilder pro Zeiteinheit aufgenommen werden, unterscheiden sich diese Bilder und die zugehörigen Phasenbilder nur um eine jeweils verhältnismäßig kleine Verformung voneinander. Die Bilder bzw. Phasenbilder werden während der Aufbringung der Belastung, also während der voranschreitenden Verformung, aufgenommen. Auf diese Weise kann z.B. erkannt werden, wann eine fehlertypische Verformung abgeschlossen ist und die Messung manuell oder automatisch beendet werden.

Ein Vorteil der Erfindung liegt in der Möglichkeit, anhand der Phasendifferenzbilder die Verformung an einem Bildanzeigegerät, z.B. einem Computer-Monitor, laufend zu beobachten. Dadurch kann der Betrachter die zeitliche Abfolge von Einzelverformungen nachvollziehen und unter anderem langsame und schnelle Vorgänge voneinander unterscheiden. Durch Auswahl geeigneter Anfangszustände bzw. Referenzzustände und zugehöriger Bilder und Phasenbilder können so einzelne Verformungsabschnitte getrennt dargestellt werden. Diese einzelnen Verformungsabschnitte können aus Bildinformationen oder externen Signalen bestimmt werden.

Vorteilhafte Weiterbildungen sind in den Unteransprüchen beschrieben.

In einer möglichen Ausgestalung der vorliegenden Erfindung können die Differenzen ausgewertet und/oder gespeichert werden, insbesondere für eine spätere Auswertung und/oder Darstellung.

Die Bilder des Objekts können mit einem Interferometrie-Verfahren aufgenommen werden. Geeignete Interferometrie-Verfahren sind beispielsweise die holographische Interferometrie, die elektronische Speckle-Pattern-Interferometrie (ESPI) oder die Speckle-Shearing-Interferometrie. Die Bilder des Objekts können allerdings auch mit einem Projektionsverfahren aufgenommen werden. In Betracht kommen insbesondere ein Gitterprojektionsverfahren oder ein Moire-Verfahren.

Die Ermittlung der Phasenbilder kann beispielsweise nach dem Verfahren der EP 419 936 B1, auf die hier ausdrücklich Bezug genommen wird, erfolgen. Nach diesem Verfahren wird das Phasenbild aus dem Bild auf dem CCD-Sensor ermittelt, und zwar, wie oben bereits erläutert, derart, dass das Phasenbild aus einem einzigen Bild ermittelt wird. Aus den unmittelbar aufgenommenen Verformungsbildern oder Interferenzlinienbildern werden Phasenbilder berechnet, die dann durch die beschriebene Differenzbildung ausgewertet werden. Wenn das jeweilige Phasenbild aus einem einzigen Bild ermittelt wird, wie dies nach der EP 419 936 B1 geschehen kann, kann das Verfahren erheblich beschleunigt werden. Es kann mit der üblichen Videotaktfrequenz durchgeführt werden.

Es ist möglich, ein demoduliertes Phasenbild zu ermitteln und auszuwerten.

Eine weitere vorteilhafte Weiterbildung ist dadurch gekennzeichnet, daß das Objekt mit kohärenter Strahlung bzw. kohärentem Licht, vorzugsweise Laserlicht, oder mit teilkohärenter Strahlung bzw. teilkohärentem Licht bestrahlt wird. Insbesondere kann das Objekt von einer Laserdiode bestrahlt werden. Nach einer weiteren vorteilhaften Weiterbildung wird das Objekt von mehreren Laserdioden bestrahlt. Die Verwendung von einer oder mehreren Laserdioden ist insbesondere deshalb vorteilhaft, weil Laserdioden verhältnismäßig kostengünstig sind. Bei der Verwendung von mehreren Laserdioden kann die Anordnung derart getroffen werden, daß sich die Ausleuchtungsbereiche der Laserdioden nicht überlappen bzw. nur geringfügig in Randbereichen überlappen. Es ist allerdings auch möglich, die Anordnung derart zu treffen, daß sich die Ausleuchtungsbereiche von zwei oder mehreren oder allen Laserdioden überlappen.

Ein besonderer Vorteil des erfindungsgemäßen Verfahrens liegt darin, dass aus weiteren Bildern und/oder Phasenbildern, die während der Verformung aufgenommen bzw. ermittelt werden, und/oder aus deren Differenzen zusätzliche Informationen gewonnen werden können. So kann über statistische und nachrichtentechnische Methoden aus den Bildern und/oder Phasenbildern und/oder deren Differenzen zu den Anfangs- und/oder Endzuständen und/oder untereinander in jedem Bildbereich die Güte der Messung ermittelt werden. Anhand dieser Güteinformation ist es z.B. möglich, die Ergebnisbilder nachzubearbeiten und die Auswertung dadurch zu erleichtern. Die ermittelten zusätzlichen Informationen, insbesondere Gütekriterien für einzelne Bildbereiche, können zur Verbesserung der Darstellung und/oder Merkmalserkennung verwendet werden.

Eine weitere vorteilhafte Weiterbildung ist dadurch gekennzeichnet, daß zeitlich aufeinanderfolgende Verformungsabschnitte manuell oder selbsttätig erkannt und/oder getrennt werden. Insbesondere können fehlertypische Verformungen manuell oder selbsttätig erkannt und/oder von Ganzkörperbewegungen und/oder Ganzkörperverformungen getrennt werden. Dabei kann eine automatisierte Merkmalserkennung durchgeführt werden.

Es ist möglich, beliebige Zeitabschnitte und/oder Teilabschnitte der Verformung miteinander zu vergleichen.

Ferner ist es möglich, die Ganzkörperverformung oder eine unerwünschte Verformung von der erwünschten Verformung zu trennen.

Eine weitere vorteilhafte Weiterbildung ist dadurch gekennzeichnet, daß die Auswertung und/oder Darstellung der Differenz zwischen dem aktuellen Phasenbild oder dem jeweiligen aktuellen Phasenbild und dem Phasenbild eines Anfangszustandes zu einem Zeitpunkt und/oder in einem Zeitabschnitt erfolgt, zu dem die Ganzkörperverformung oder eine unerwünschte Verformung nach einem höheren Wert wieder einen geringeren Wert angenommen hat. Zu diesem Zeitpunkt oder in diesem Zeitabschnitt ist der Anteil der erwünschten Verformung höher, so daß die Verformung des Objekts besser erfaßt werden kann und/oder Fehler des Objekts besser erkannt werden können.

Nach einer weiteren vorteilhaften Weiterbildung werden Teibereiche der Phasenbilder und/oder der Phasendifferenzbilder mit Nachbarbereichen der Phasenbilder bzw. Phasendifferenzbilder verglichen. Bei den Teilbereichen kann es sich um einen oder mehrere Bildpunkte (Pixel) handeln. Die Teilbereiche können einen Teil oder das gesamte Phasenbild bzw. Phasendifferenzbild ausfüllen. Der Nachbarbereich kann aus einem oder mehreren Bildpunkten bestehen. Insbesondere werden der oder die Nachbarbereiche von der unmittelbaren Umgebung des Teilbereichs gebildet.

Nach dieser vorteilhaften Weiterbildung werden Teilbereiche mit geringer Aussagefähigkeit eliminiert. Die Aussagefähigkeit des Teilbereichs kann insbesondere durch statistische Methoden festgestellt werden. Die Elimination eines Teilbereichs mit geringer Aussagefähigkeit kann insbesondere dadurch erfolgen, daß die Werte dieses Teilbereichs durch Werte aus der Umgebung, insbesondere aus der unmittelbaren Umgebung, ersetzt werden.

Die der Erfindung zugrundeliegende Aufgabe wird bei einer Vorrichtung zur Erfassung der Verformung von Objekten durch die Merkmale des Anspruchs 13 gelöst. Die Vorrichtung umfaßt eine Meßeinrichtung zur Aufnahme einer Folge von Bildern des Objekts während der Verformung des Objekts, eine Einrichtung zum Ermitteln von Phasenbildern aus den aufgenommenen Bildern, eine Auswerteeinrichtung zum Bilden der Differenz zwischen dem jeweiligen aktuellen Phasenbild und dem Phasenbild eines Anfangszustands und ein Bildanzeigegerät zum Darstellen dieser Differenzen. Weiterin ist eine Einrichtung zum Visualisieren der Phasendifferenzbilder als Film vorgesehen.

Vorteilhafte Weiterbildungen der erfindungsgemäßen Vorrichtung sind in den weiteren Unteransprüchen beschrieben.

Die Vorrichtung kann eine Auswerteeinrichtung und/oder einen Speicher zum Auswerten und/oder Speichern der Differenzen umfassen.

Weiterhin kann die erfindungsggemäße Vorrichtung eine oder mehrere Einrichtungen zur Durchführung der vorteilhaften Verfahrensmerkmale aufweisen.

Ein Ausführungsbeispiel der Erfindung wird nachstehend anhand der beigefügten Zeichnung im einzelnen erläutert. In der Zeichnung zeigt
- Fig. 1: eine Meßeinrichtung und ein Objekt in einer schematischen Darstellung,
- Fig. 2: den zeitlichen Verlauf der Verformung eines Reifens in einem Reifenprüfgerät und
- Fig. 3: den zeitlichen Verlauf der Phasendifferenzwerte von neun benachbarten Bildpunkten in 26 aufeinanderfolgenden Aufnahmezeitpunkten.

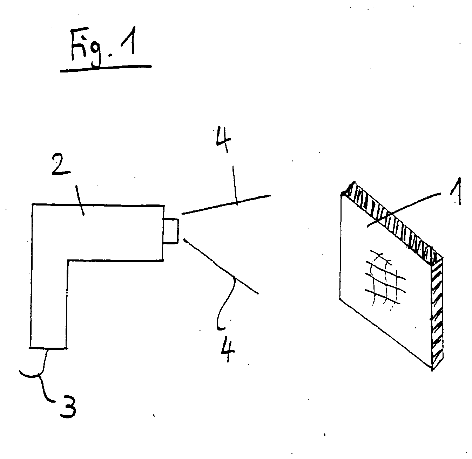

Wie in Fig. 1 dargestellt wird ein Objekt 1, z.B. ein Reifen oder ein Verbundwerkstoff, mit einem Meßkopf 2 laufend beobachtet. Das Objekt 1 wird verformt, z.B. durch Druck, Unterdruck, Wärme oder dergleichen. Der Meßkopf 2 ist über eine Leitung 3 mit einem Auswertegerät, z.B. einem PC oder sonstigen Computer, verbunden.

Bei dem Meßkopf kann es sich um ein Gerät handeln, das nach dem in der EP 419 936 B1 beschriebenen Verfahren arbeitet. Der Meßkopf 2 weist Laserdioden auf, die das Objekt 1 mit Laserlicht 4 bestrahlen.

Durch den Meßkopf 2 werden laufend Bilder des Objekts 1 aufgenommen. Dies geschieht während der Verformung des Objekts 1. Zur Aufnahme der Bilder ist in dem Meßkopf 2 ein CCD-Sensor vorhanden. Die Bilder werden mit Videotaktfrequenz (25 Vollbilder pro Sekunde) aufgenommen oder auch - je nach Anwendungsfall - mit einer kleineren oder größeren Frequenz.

Aus den Bildern werden ständig Phasenbilder berechnet. Dies erfolgt vorzugsweise in 1-Bild-Technik (räumlicher Phasenshift). Aus jedem Bild wird also ein Phasenbild berechnet. Dies kann nach dem Verfahren geschehen, das in der EP 419 936 B1 beschrieben ist. Eine Aufnahme des Objekts 1 im Ruhezustand ist nicht erforderlich. Es ist allerdings auch möglich, anstelle der 1-Bild-Technik einen zeitlichen Phasenshift durchzuführen, bei dem jeweils ein Phasenbild aus mehreren, im allgemeinen drei oder vier nacheinander aufgenommenen Bildern berechnet wird, oder mehrere Kameras zu verwenden, die jeweils ein phasengeschobenens Bild aufnehmen, aus denen dann ein Phasenbild berechnet wird.

Die Differenzen der laufend aufgenommenen Phasenbilder zum Ausgangsbild beschreiben die 2 π-modulierte Gesamtverformung zwischen dem Ausgangszeitpunkt und den Aufnahmezeitpunkten.

Beliebige Teilabschnitte einer Verformung können einzeln betrachtet werden. Dies kann insbesondere dann sinnvoll sein, wenn sich mehrere zeitlich versetzte oder unterschiedlich schnelle Verformungsvorgänge zur Gesamtverformung überlagern.

In der zerstörungsfreien Werkstoffprüfung ist häufig der eigentlich untersuchten, atypischen Werkstückverformung eine typische "Ganzkörperverformung" überlagert. In vielen Fällen ist das Maß dieser Ganzkörperverformung größer als das des gesuchten Fehlers im Objekt. Dadurch ist es oft schwierig, den Fehler zu erkennen, weil die überlagerte globale Verformung zu einer unübersichtlichen Ergebnisbildanzeige führt und den eigentlich gesuchten Fehler überlagert.

Dies sei anhand eines Beispiels erläutert, bei dem Reifen mit Fehlern in eine Unterdruckkammer eingebracht werden. Die Fehler vergrößern sich während der Absenkung des Druckes in der Unterdruckkammer. Sie können mit Shearografie sichtbar gemacht werden. Die durch die Fehler hervorgerufene Verformung ist die "erwünschte" Verformung, die ermittelt und sichtbar gemacht werden soll. Die Reifen pflegen nach einer Deformation, die z.B. durch das Einbringen in die Prüfkammer hervorgerufen werden kann, langsam wieder ihre ursprüngliche Form anzunehmen. Hierbei handelt es sich um die "unerwünschte Ganzkörperverformung", die der eigentlich zu untersuchenden, atypischen, erwünschten Verformung überlagert ist. Bei der Prüfung von Reifen ist diese Ganzkörperverformung vom beaufschlagten Unterdruck weitgehend unabhängig.

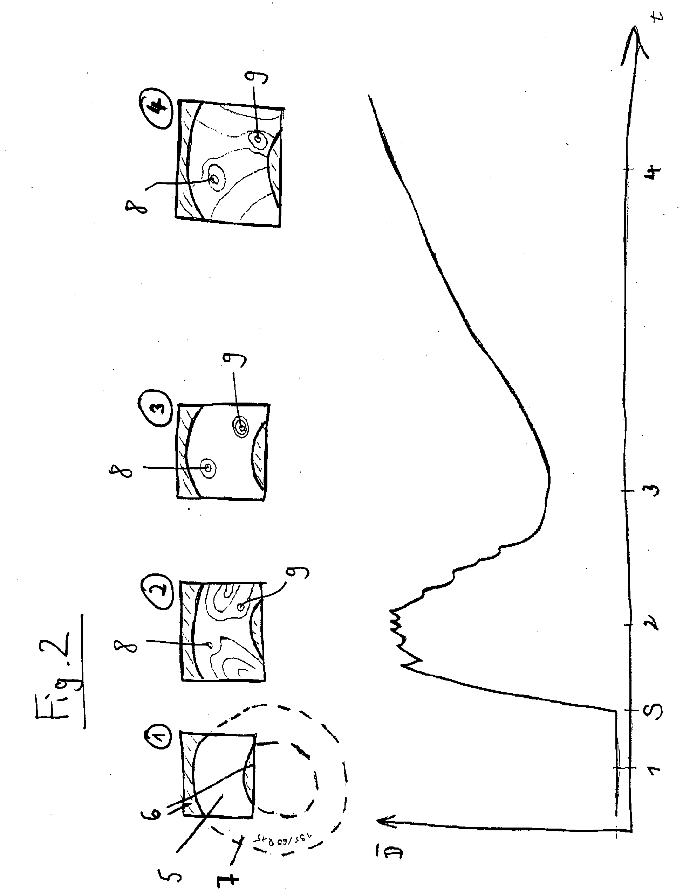

Fig. 2 zeigt den zeitlichen Verlauf der Verformung eines Teils einer Seitenwand 5 eines Reifens 7, nämlich eines PKW-Reifens, der nicht auf einer Felge montiert ist und der in eine Unterdruckkammer eingebracht wird, in der er flach auf einer Unterlage 6 liegt.

Im Zeitpunkt 1 liegt der Reifen 7 auf der Unterlage 6 auf. Zum Zeitpunkt S wird der Reifen 7 mit Unterdruck beaufschlagt, indem dieser Unterdruck in der Unterdrucckammer erzeugt wird. Zum Zeitpunkt S wird also die Belastung aufgebracht, die im Folgenden die Verformung des Reifens 7 erzeugt. Der Unterdruck wird bis zum Zeitpunkt 2 gesteigert, die Belastung wird also bis zu diesem Zeitpunkt 2 erhöht.

Die durchschnittliche Gesamtverformung D zeigt den im unteren Teil der Fig. 2 dargestellten zeitlichen Verlauf. Im Ruhezustand, also zum Zeitpunkt 1 vor der Belastungsänderung S, beträgt die durchschnittliche Gesamtverformung D Null. Während der Belastungsänderung, also vom Zeitpunkt S des Belastungsbeginns bis zur vollständigen Aufbringung der Unterdruckbelastung im Zeitpunkt 2, steigt die durchschnittliche Gesamtverformung D zunächst steil an und geht dann in Schwingungen um einen erhöhten Wert der durchschnittlichen Gesamtverformung D über. Anschließend nimmt die durchschnittliche Gesamtverformung D ab, bis sie im Zeitpunkt 3 ein Minimum erreicht, nach dem sie langsam wieder zunimmt (Zeitpunkt 4).

Im oberen Teil der Fig. 2 sind die zugehörigen Phasenbilder für jeweils einen Teilbereich der Seitenwand 5 des Reifens 7 dargestellt. Zum Zeitpunkt 2 ist die durchschnittliche Gesamtverformung D verhältnismäßig groß, so daß die erwünschte Verformung relativ gering ist. Dementsprechend können die Fehlstellen 8, 9 nicht ohne weiteres erkannt werden, da sie von relativ vielen Höhenlinien, die die unerwünschte Verformung repräsentieren, umgeben sind. Zum Zeitpunkt 3 sind die Störungen weitgehend abgeklungen. Die unerwünschte Verformung erreicht ein Minimum und die erwünschte Verformung erreicht ein relatives Maximum. Hier sind die Fehlstellen 8, 9 klar erkennbar. Die Erkennbarkeit der Fehlstellen 8, 9 vermindert sich in der Folgezeit, da beispielsweise im Zeitpunkt 4 wieder Höhenlinien für die unerwünschte Verformung erscheinen.

Bei hinreichend schneller Unterdruckbeaufschlagung des Reifens 7 wird die erwünschte Verformung in sehr kurzer Zeit erreicht, während die unverwünschte Verformung relativ langsam erfolgt. Durch die Betrachtung der Gesamtverformung, also der durchschnittlichen Gesamtverformung D im unteren Teil der Fig. 2, können unterschiedliche Verformungsabschnitte zeitlich aufgelöst werden. So läßt sich beispielsweise bei der Prüfung von Reifen beobachten, daß die mittlere Verformung D in dem betrachteten Bildausschnitt zu Beginn der Belastungsänderung, also zwischen den Zeitpunkten S und 2, sehr groß ist. Hierbei treten zusätzlich zu den beschriebenen erwünschten und unerwünschten Verformungen reversible Störungen auf, da der Reifen 7 durch die plötzliche Druckänderung zu Schwingungen angeregt wird. Diese Schwingungen klingen dann allerdings nach dem Zeitpunkt 2 schnell wieder ab. Nach dem Abklingen dieser Schwingungen bzw. Störungen erreicht die mittlere Verformung D zum Zeitpunkt 3 ein Minimum. Zu diesem Zeitpunkt liegt fast ausschließlich die erwünschte Verformung vor, und die unerwünschte Verformung hat ein Minimum erreicht. Vorzugsweise erfolgt die Auswertung und/oder Darstellung zu diesem Zeitpunkt, zu dem die Ganzkörperverformung bzw. die unerwünschte Verformung nach einem höheren Wert zum Zeitpunkt 2 wieder einen geringeren Wert angenommen hat. Nach dem Zeitpunkt 3 nimmt der Mittelwert der Verformung D in dem betrachteten Bildausschnitt mit dem Anwachsen der unverwünschten Verformung wieder zu.

Durch das erfindungsgemäße Messen der Verformung während einer Unterdruckänderung wird die aus erwünschter und unerwünschter Komponente kombinierte Gesamtverformung gemessen. Durch eine statistische Betrachtung der Einzelergebnisbilder kann der Belastungszeitraum zwischen Anfangs- und Endzustand so gewählt werden, dass die erwünschte Komponente voll, die unerwünschte Komponente (unerwünschte Ganzkörperverformung) hingegen kaum ausgeprägt ist.

Als Kriterium, um den zeitlichen Verlauf der Verformung auszuwerten und/oder abzubilden, kann, wie erwähnt, die mittlere Verformung im Differenzphasenbild verwendet werden. Anstelle der mittleren Verformung D können aber auch andere Größen verwendet werden, beispielsweise die Standardabweichung oder eine andere mathematische Funktion oder statistische Größe aus dem Differenzphasenbild. Ein weiteres brauchbares Kriterium kann durch einen Vergleich gebildet werden, beispielsweise durch eine Differenz aufeinanderfolgender Bilder und/oder Phasenbilder und/oder Phasendifferenzbilder. Ein weiteres brauchbares Kriterium kann aus einem Ausgangs-Videobild hergeleitet werden. Ferner ist es möglich, externe Signale zu nutzen. Die verschiedenen Kriterien und/oder Signale können kombiniert werden.

Fig. 2 zeigt einzelne Abschnitte der Verformung anhand tpyischer Differenzphasenbilder (im oberen Teil der Fig. 2) und eine Diagramm mit dem zeitlichen Verlauf der mittleren Verformung D (im unteren Teil der Fig. 2). Das Prüfobjekt ist in diesem Beispiel ein PKW-Reifen 7, dessen Seitenwand in einzelnen Sektoren abschnittsweise geprüft wird. In den Kamera-Bildern 1 bis 4 ist ein Teilbereich der Seitenwand 5 zu sehen sowie Teile der Unterlage 6, auf der Reifen liegend ruht. Die Kammerabilder 1 bis 4 zeigen verschiedene Aufnahmezeitpunkte 1 bis 4 , nämlich im Ruhezustand 1 vor der Belastungsänderung S, während der Belastungsänderung 2, nach Abklingen der Störungen im Minimum 3 der Gesamtverofrmung und während des Zunehmens der unverünschten Verformung 4. Das zeitliche Diagramm im unteren Bereich der Fig. 2 illustriert den Verlauf der durchschnittlichen Gesamtverformung D mit dem jeweiligen Aufnahmezeitpunkten 1 bis 4.

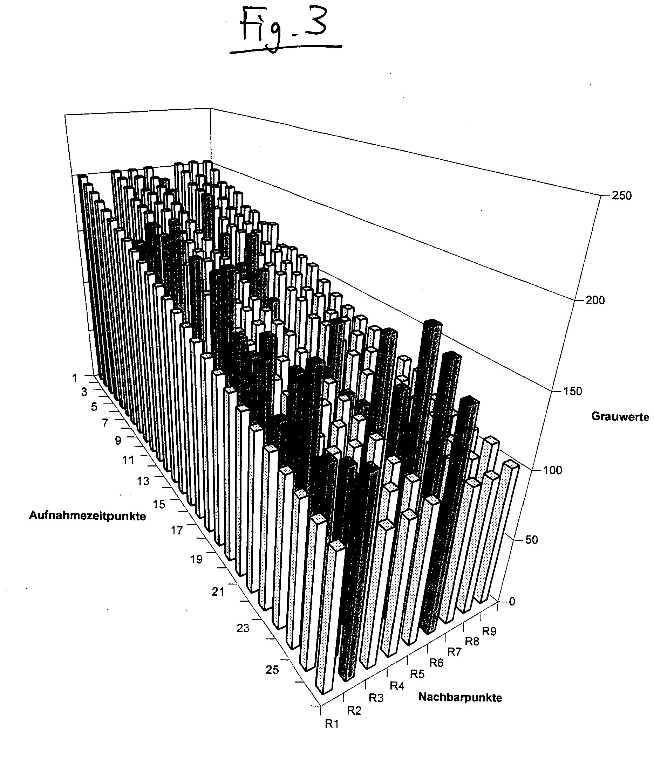

Ein weiterer Vorteil, der mit einer vorteilhaften Weiterbildung des erfindungsgemäßen Verfahrens erreichbar ist, liegt in der Verbesserung der Bildqualität. Dies wird nachfolgend anhand Fig. 3 erläutert, die den zeitlichen Verlauf der Werte von neun benachbarten Bildpunkten R1 bis R9 in 26 aufeinanderfolgenden Aufnahmezeitpunkten 1 bis 26 zeigt. Bei den Werten handelt es sich um Phasendifferenzwerte, die durch Grauwerte dargestellt werden. Die Höhe jedes Balkens entspricht dem jeweiligen Grauwert.

Die Bildpunkte R1, R3, R4, R5, R7, R8 und R9 zeigen jeweils einen ähnlichen Grauwertverlauf, der im Aufnahmezeitpunkt 1 etwa 200 beträgt und bis zum Aufnahmezeitpunkt 26 auf etwa 100 absinkt. Die Grauwerte der Bildpunkte R2 und R6 weichen hiervon erheblich ab, und sie schwanken sehr stark. Nach einer vorteilhaften Weiterbildung der Erfindung können die Teilbereiche der Phasendifferenzbilder, die von den Bildpunkten R2 und R6 gebildet werden, mit den jeweiligen Nachbarbereichen verglichen werden, und diese Teilbereiche R2 und R6 mit geringer Aussagefähigkeit können eliminiert werden. Dies kann dadurch geschehen, daß die Grauwerte für die Bildpunkte R2 und R6 durch mittlere Werte aus der Umgebung, insbesondere der unmittelbaren Umgebung, dieser Bildpunkte ersetzt werden.

Beim Ausführungsbeispiel nach Fig. 3 werden die Teilbereiche der Phasendifferenzbilder, die mit den Nachbarbereichen verglichen werden und die bei geringer Aussagefähigkeit eliminert werden, von jeweils einem Bildpunkt gebildet, nämlich dem Bildpunkt R2 und dem Bildpunkt R6. Es ist allerdings auch möglich, mehrere Bildpunkte zu einem mit einem oder mehreren Nacbbarbereichen zu vergleichenden Teilbereich zusammenzufassen.

Durch die vorteilhafte Weiterbildung der Erfindung kann die Bildqualität verbessert werden. Es ist möglich, aufeinanderfolgende Phasenbilder oder Differenzphasenbilder auf lokale Unterschiede zu untersuchen. In Bereichen mit starken Verformungen werden große Veränderungen in den lokalen Grauwerten erwartet, während in Bereichen mit geringfügigen Verformungen auch nur geringfügige Veränderungen in den lokalen Grauwerten zu erwarten sind. Wenn lokal starke, in der unmittelbaren räumlichen Umgebung jedoch nur verhältnismäßig geringe Verformungen auftreten, deutet dies auf eine geringe Aussagefähigkeit der untersuchten Teilbereiche hin. Durch Elimineren der Ergebnisse dieser Teilbereiche läßt sich die Bildqualität der aus diesen Ergebnissen gebildeten Bilder deutlich verbessern, ohne daß dabei fehlertypische Verformungen mit kleiner räumlicher, lateraler Ausprägung zu stark beeinträchtigt werden wüden. Die Aussagefähigkeit der Teilbereiche kann durch statistische Methoden und/oder mathematische Methoden und/oder mathematische Funktionen festgestellt werden.

Das Balkendiagramm nach Fig. 3 verdeutlicht dies. Während die meisten Bildpunkten einen ähnlichen Grauwertverlauf zeigen, sind die Grauwerte der Bildpunkte R2 und R6 stark schwankend. Sie werden als von der Gesamtverformung statistisch unabhängig angesehen und durch mittlere Werte aus der Umgebung ersetzt, wodurch sich deutlich verbesserte Ergebnisbilder ergeben.

## Patentansprüche

1. Verfahren zur Erfassung der Verformung von Objekten (1),
bei dem während der Verformung des Objekts (1) eine Folge von Bildern des Objekts (1) mit einem Meßverfahren aufgenommen wird,
aus den Bildern Phasenbilder ermittelt werden, **dadurch gekennzeichnet, dass** die Differenz zwischen dem jeweiligen aktuellen Phasenbild und dem Phasenbild eines Anfangszustands gebildet wird
und diese Differenzen auf einem Bildanzeigegerät dargestellt werden,
wobei die aus den Phasenbildern gebildeten Phasendifferenzbilder als Film visualisiert werden.

2. Verfahren nach Anspruch 1, **dadurch gekennzeichnet, daß** die Differenzen ausgewertet und/oder gespeichert werden.

3. Verfahren nach Anspruch 1 oder 2, **dadurch gekennzeichnet, daß** die Bilder des Objekts (1) mit einem Interferometrie-Verfahren aufgenommen werden, vorzugsweise mit holografischer Interferometrie oder elektronischer Speckle-Pattern-Interferometrie (ESPI) oder mit Speckle-Shearing-Interferometrie.

4. Verfahren nach Anspruch 1 oder 2, **dadurch gekennzeichnet, daß** die Bilder des Objekts (1) mit einem Projektionsverfahren aufgenommen werden, vorzugsweise mit einem Gitterprojektionsverfahren oder mit einem Moire-Verfahren.

5. Verfahren nach einem der vorhergehenden Ansprüche, **dadurch gekennzeichnet, daß** das Phasenbild aus einem Bild ermittelt wird.

6. Verfahren nach einem der vorhergehenden Ansprüche, **dadurch gekennzeichnet, daß** das Objekt (1) mit kohärenter Strahlung, insbesondere kohärentem Licht oder Laserlicht (4), oder mit teilkohärenter Strahlung, insbesondere teilkohärentem Licht bestrahlt wird, wobei das Objekt (1) vorzugsweise von einer oder mehreren Laserdioden bestrahlt wird.

7. Verfahren nach einem der vorhergehenden Ansprüche, **dadurch gekennzeichnet, dass** aus zwei oder mehreren aufeinanderfolgenden Bildern und/oder Phasenbildern und/oder deren Differenzen zusätzliche Informationen gewonnen werden, beispielsweise über statistische oder nachrichtentechnische Methoden.

8. Verfahren nach einem der vorhergehenden Ansprüche, **dadurch gekennzeichnet, dass** zeitlich aufeinanderfolgende Verformungsabschnitte manuell oder selbsttätig erkannt und/oder getrennt werden, wobei insbesondere fehlertypische Verformungen von Ganzkörperbewegungen und/oder -verformungen getrennt werden, wobei vorzugsweise eine automatisierte Merkmalserkennung durchgeführt wird.

9. Verfahren nach einem der vorhergehenden Ansprüche, **dadurch gekennzeichnet, daß** Zeitabschnitte und/oder Teilabschnitte der Verformung miteinander verglichen werden.

10. Verfahren nach einem der vorhergehenden Ansprüche, **dadurch gekennzeichnet, daß** die Ganzkörperverformung oder eine unerwünschte Verformung von der erwünschten Verformung getrennt wird.

11. Verfahren nach einem der vorhergehenden Ansprüche, **dadurch gekennzeichnet, daß** die Auswertung und/oder Darstellung zu einem Zeitpunkt (3) erfolgt, zu dem die Ganzkörperverformung oder eine unerwünschte Verformung nach einem höheren Wert wieder einen geringeren Wert angenommen hat.

12. Verfahren nach einem der vorhergehenden Ansprüche, **dadurch gekennzeichnet, daß** Teilbereiche der Phasenbilder und/oder der Phasendifferenzbilder mit Nachbarbereichen verglichen werden und daß Teilbereiche mit geringer Aussagefähigkeit eliminiert werden.

13. Vorrichtung zur Erfassung der Verformung von Objekten (1), insbesondere zur Durchführung des Verfahren nach einem der Ansprüche 1 bis 14, mit einer Meßeinrichtung (2) zur Aufnahme einer Folge von Bildern des Objekts (1) während der Verformung des Objekts (1), mit einer Einrichtung zum Ermitteln von Phasenbildern aus den aufgenommenen Bildern, **gekennzeichnet durch** eine Auswerteeinrichtung zum Bilden der Differenz zwischen dem jeweiligen aktuellen Phasenbild und dem Phasenbild eines Anfangszustands, ein Bildanzeigegerät zum Darstellen der Differenzen, und eine Einrichtung zum Visualisieren der Phasendifferenzbilder als Film.

14. Vorrichtung nach Anspruch 13, **gekennzeichnet durch** eine Auswerteeinrichtung und/oder einen Speicher zum Auswerten und/oder Speichern der Differenzen.

15. Vorrichtung nach Anspruch 13 oder 14, **dadurch gekennzeichnet, daß** die Meßeinrichtung eine Interferometrie-Einrichtung und/oder eine Projektionseinrichtung und/oder eine Quelle für kohärente Strahlung oder kohärentes Licht oder teilkohärente Strahlung oder teilkohärentes Licht umfaßt.

16. Vorrichtung nach einem der Ansprüche 13 - 15, **gekennzeichnet durch** eine oder mehrere Laserdioden.

## Claims

1. A method for detecting the deformation of objects (1),
in which during the deformation of the object (1) a sequence of pictures of the object (1) is taken by means of a measurement method, and
from the pictures phase images are determined, **characterized in that**
the difference between the respective current phase image and the phase image of an initial state is formed,
and these differences are displayed on a visual display unit,
wherein the phase difference images formed from the phase images are visualized as a film.

2. The method as claimed in claim 1, **characterized in that** the differences are evaluated and/or stored.

3. The method as claimed in claim 1 or 2, **characterized in that** the pictures of the object (1) are taken with a method of interferometry, preferably with holographic interferometry or electronic speckle pattern interferometry (ESPI) or with speckle shearing interferometry.

4. The method as claimed in claim 1 or 2, **characterized in that** the pictures of the object (1) are taken with a projection method, preferably with a grating projection method or with a moiré method.

5. The method as claimed in any of the preceding claims, **characterized in that** the phase image is determined from a picture.

6. The method as claimed in any of the preceding claims, **characterized in that** the object (1) is irradiated with coherent radiation, in particular coherent light or laser light (4), or with partly coherent radiation, in particular partly coherent light, wherein the object (1) is preferably irradiated by one or more laser diodes.

7. The method as claimed in any of the preceding claims, **characterized in that** from two or more successive pictures and/or phase images and/or the differences thereof additional information is obtained, for instance by statistical or telecommunications methods.

8. The method as claimed in any of the preceding claims, **characterized in that** temporally successive deformation sections are detected manually or automatically and/or are separated, wherein in particular defect-typical deformations are separated from whole-body movements and/or whole-body deformations, wherein an automated detection of features is preferably performed.

9. The method as claimed in any of the preceding claims, **characterized in that** time segments and/or partial segments of the deformation are compared with each other.

10. The method as claimed in any of the preceding claims, **characterized in that** the whole-body deformation or an undesired deformation is separated from the desired deformation.

11. The method as claimed in any of the preceding claims, **characterized in that** the evaluation and/or representation is effected at a time (3) at which the whole-body deformation or an undesired deformation has again assumed a lower value after a higher value.

12. The method as claimed in any of the preceding claims, **characterized in that** partial areas of the phase images and/or the phase difference images are compared with neighboring areas and that partial areas with little significance are eliminated.

13. An apparatus for detecting the deformation of objects (1), in particular for performing the method as claimed in any of claims 1 to 14, comprising a measurement means (2) for taking a sequence of pictures of the object (1) during the deformation of the object (1), a means for determining phase images from the pictures taken, **characterized by** an evaluation means for forming the difference between the respective current phase image and the phase image of an initial state, a visual display unit for displaying the differences, and a means for visualizing the phase difference images as a film.

14. The apparatus as claimed in claim 13, **characterized by** an evaluation means and/or a memory for evaluating and/or storing the differences.

15. The apparatus as claimed in claim 13 or 14, **characterized in that** the measurement means comprises an interferometry means and/or a projection means and/or a source of coherent radiation or coherent light or partly coherent radiation or partly coherent light.

16. The apparatus as claimed in any of claims 13-15, **characterized by** one or more laser diodes.

## Revendications

1. Procédé pour la détection de la déformation d'objets (1), dans lequel, pendant la déformation de l'objet (1), une séquence d'images de l'objet (1) est acquise par un procédé de mesure et des images de phase sont déterminées à partir des images,
**caractérisé en ce que** la différence entre l'image de phase actuelle respective et l'image de phase d'un état initial est créée et **en ce que** lesdites différences sont affichées sur un appareil d'affichage d'image, dans lequel les images de différence de phase créées à partir des images de phase sont visualisées sous forme de film.

2. Procédé selon la revendication 1, **caractérisé en ce que** les différences sont évaluées et/ou mémorisées.

3. Procédé selon la revendication 1 ou 2, **caractérisé en ce que** les images de l'objet (1) sont acquises par un procédé interférométrique, de préférence par interférométrie holographique ou interférométrie électronique à motif de tavelures (ESPI) ou par interférométrie à cisaillement de tavelure.

4. Procédé selon la revendication 1 ou 2, **caractérisé en ce que** les images de l'objet (1) sont acquises par un procédé de projection, de préférence par un procédé de projection en grille ou par un procédé de type moiré.

5. Procédé selon l'une des revendications précédentes, **caractérisé en ce que** l'image de phase est déterminée à partir d'une image.

6. Procédé selon l'une des revendications précédentes, **caractérisé en ce que** l'objet (1) est irradié avec un rayonnement cohérent, en particulier une lumière cohérente ou une lumière laser (4), ou avec un rayonnement partiellement cohérent, en particulier une lumière partiellement cohérente, dans lequel l'objet (1) est de préférence irradié par une ou plusieurs diodes laser.

7. Procédé selon l'une des revendications précédentes, **caractérisé en ce que** des informations supplémentaires sont obtenues à partir de deux ou plusieurs images et/ou images de phase successives et/ou de leurs différences, par exemple par l'intermédiaire de méthodes statistiques ou de transmission de messages.

8. Procédé selon l'une des revendications précédentes, **caractérisé en ce que** des sections de déformation chronologiquement consécutives sont reconnues et/ou séparées manuellement ou automatiquement, dans lequel des déformations typiques des défauts sont notamment séparées des mouvements et/ou déformations du corps entier, dans lequel une reconnaissance automatisée des traits caractéristiques est de préférence effectuée.

9. Procédé selon l'une des revendications précédentes, **caractérisé en ce que** des périodes de temps et/ou des sections partielles de la déformation sont comparées entre elles.

10. Procédé selon l'une des revendications précédentes, **caractérisé en ce que** la déformation du corps entier ou une déformation non souhaitée est séparée de la déformation souhaitée.

11. Procédé selon l'une des revendications précédentes, **caractérisé en ce que** l'évaluation et/ou la représentation est/sont effectuée(s) à un instant (3) où la déformation du corps entier ou une déformation non souhaitée a repris une valeur inférieure après une valeur supérieure.

12. Procédé selon l'une des revendications précédentes, **caractérisé en ce que** des zones partielles des images de phase et/ou des images de différence de phase sont comparées à des zones voisines et **en ce que** des zones partielles à faible valeur informative sont éliminées.

13. Dispositif pour la détection de la déformation d'objets (1), en particulier pour la mise en oeuvre du procédé selon l'une des revendications 1 à 14, comportant un moyen de mesure (2) destiné à acquérir une séquence d'images de l'objet (1) pendant la déformation de l'objet (1), un moyen destiné à déterminer des images de phase à partir des images acquises,
**caractérisé par** un moyen d'évaluation destiné à déterminer la différence entre l'image de phase actuelle respective et l'image de phase d'un état initial, un appareil d'affichage d'image destiné à représenter les différences, et un moyen destiné à visualiser les images de différence de phase sous forme de film.

14. Dispositif selon la revendication 13, **caractérisé par** un dispositif d'évaluation et/ou une mémoire destiné à évaluer et/ou mémoriser les différences.

15. Dispositif selon la revendication 13 ou 14, **caractérisé en ce que** le dispositif de mesure comprend un dispositif interférométrique et/ou un dispositif de projection et/ou une source de rayonnement cohérent ou de lumière cohérente ou de rayonnement partiellement cohérent ou de lumière partiellement cohérente.

16. Dispositif selon l'une des revendications 13 à 15, **caractérisé par** une ou plusieurs diodes laser.
